# EUROPÄISCHE PATENTSCHRIFT

(11) **EP 0 436 135 B1**
(45) Veröffentlichungstag und Bekanntmachung des Hinweises auf die Patenterteilung: **27.07.1994**
(21) Anmeldenummer: 90123276.9
(22) Anmeldetag: 05.12.1990
(51) Int. Cl.: C09D 5/44

(54) **Verfahren zur Herstellung von Dibutylzinnoxid enthaltenden Katalysatorpasten und deren Verwendung**
Method of making dibutyltinoxide containing catalyst pastes and use thereof
Procédé de préparation de pâtes catalytiques contenant de l'oxyde de dibutylétain et leur utilisation

(30) Priorität: 09.12.1989 DE 3940781
(43) Veröffentlichungstag der Anmeldung: 10.07.1991
(73) Patentinhaber: Herberts Gesellschaft mit beschränkter Haftung, 42285 Wuppertal (DE)
(72) Erfinder: Büttner, Gabriele, W-4030 Ratingen (DE); David, Norbert, W-5628 Heiligenhaus (DE); Klein, Klausjörg, W-5600 Wuppertal 2 (DE)
(74) Vertreter: Türk, Gille, Hrabal, Leifert

(56) Entgegenhaltungen:
- EP-A- 0 251 772
- EP-A- 0 261 486
- WO-A-86/05196

## Beschreibung

Die Erfindung betrifft ein Verfahren zur Herstellung einer Katalysatorpaste für kathodisch abscheidbare Elektrotauchlacke auf der Basis von Dibutylzinnoxid (DBTO).

Die kathodische Elektrotauchlackierung ist ein bekanntes Verfahren zur Lackierung von elektrisch leitenden Oberflächen, wie z. B. Oberflächen von Metallen, elektrisch leitenden Kunststoffen, elektrisch leitenden Lackschichten usw. Bei diesem Verfahren werden die Lackpartikel aus dem Elektrotauchlackbad auf der Oberfläche des kathodisch geschalteten Werkstücks ausgefällt. Diese koagulierten Bestandteile verfließen dann zu einem homogenen glatten Film, der danach chemisch vernetzt werden kann. Das Verfließen und Vernetzen wird häufig durch Erwärmen des Substrates unterstützt.

Für viele Einsatzzwecke, z. B. in der Automobilindustrie, müssen optisch besonders gute Überzüge erzielt werden. Die Beschichtung soll also auf verschiedenen Oberflächen ein einheitliches homogenes Bild liefern, ebenso wie eine gleichmäßige Schichtverteilung. Ebenso dürfen keine Oberflächenstörungen, wie Krater, Stippen oder Koagulate, zu erkennen sein. Diese können ihre Ursache entweder in dem verwendeten Bindemittel oder aber in der Pigmentdispergierung haben.

Störungen aus dem Bindemittel, z. B. Gelteilchen, können entstehen, wenn bei der Synthese der Harze Inhomogenitäten vorhanden waren, die dann zu einem unterschiedlichen Molekül- und Harzaufbau führen, unter Umständen zur Vergelung. Eine weitere Möglichkeit ist die, daß nach der Synthese des Bindemittels bei der weiteren Verarbeitung zu einem Elektrotauchlack-Überzugsmittel zu hohe Temperaturen angewandt werden. Das kann zu Zersetzungserscheinungen führen. Ebenso besteht die Möglichkeit, daß eine vorzeitige Vernetzung eintritt. Diese Gelteilchen können zu Oberflächenstörungen auf dem abgeschiedenen Lack führen. Sie müssen deswegen durch Filtration entfernt werden oder aber bei der Herstellung und Verarbeitung der Bindemittel ist ein gewisser Temperaturbereich nicht zu überschreiten.

Die Pigmentdispergierung, d. h. die Dispergierung von nicht löslichen Bestandteilen, wie Farbpigmente, Katalysatoren etc., findet meist in einem Bindemittel statt, häufig in einem besonderen Anreibebindemittel. Dieses Anreibebindemittel kann entweder ionische Gruppen enthalten oder durch Neutralisation mit einer entsprechenden Säure ionisierbare Gruppen enthalten. In einer Mischung dieses Anreibebindemittels mit Säure, Lösungsmittel, gegebenenfalls voll entsalztem Waser, und weiteren Additiven werden die Pigmente eingerührt. Nach Einstellen auf eine geeignete Viskosität wird die erhaltene Paste auf die nötige Kornfeinheit vermahlen. Dabei ist die Verweilzeit in dem Mahlaggregat für eine gute Dispergierung entscheidend. Als Mahlaggregat ist z. B. eine Perlmühle geeignet.

Durch die Dispergierung dieser viskosen Paste entsteht eine erhebliche Wärmemenge. Diese muß durch Kühlung aus der Paste während der Vermahlung abgeführt werden, oder die Paste verändert sich unter Umständen irreversibel. Um eine gute Dispergierung zu erreichen, ist also unter Umständen ein mehrmaliges Durchlaufen des Mahlganges notwendig. Dieses ist sehr energie- und kostenintensiv und kann gegebenenfalls die Paste nachträglich negativ beeinflußen.

Verschiedene Pigmente, wobei unter diesen Begriff auch andere nichtlösliche Bestandteile fallen sollen, wie feste Katalysatoren, zeigen ein unterschiedliches Dispergierverhalten. Dabei hat sich gezeigt, daß Dibutylzinnoxid, ein häufig verwendeter pulverförmiger Katalysator, besonders schwer zu dispergieren ist. Ein schlecht dispergierter Katalysator kann zwar noch in den Elektrotauchbädern seine katalytische Wirkung entfalten, führt aber zu optisch nicht geeigneten Filmoberflächen. Diese enthält Stippen oder Krater, und muß vor dem weiteren Oberbeschichten erst noch nachträglich geschliffen und bearbeitet werden.

In der EP-B 0 193 685 wird eine DBTO-Paste beschrieben in der das DBTO in einem Anreibeharz dispergiert ist. Zur Herstellung wird das Anreibebindemittel, das Dibutylzinnoxid und voll entsalztes Wasser gemischt und diese Mischung danach auf einer geeigneten Mühle vermahlen. Über die Mahlintensität oder die Anzahl der Mahlgänge wird keine Aussage getroffen. Diese DBTO-Paste kann in Elektrotauchlack-Überzugsmitteln eingesetzt werden und zusammen mit den Harzen abgeschieden werden. In der EP-A 0 251 772 wird zu der Mischung aus Anreibeharz, voll entsalztem Wasser und DBTO noch ein übliches Netzmittel zugegeben. Diese Paste ist dann zu vermahlen. Um eine im Überzugsmittel gut dispergierbare Paste zu erhalten muß lange unter genauer Temperatursteuerung vermahlen werden.

Aufgabe der Erfindung ist die Bereitstellung von Dibutylzinnoxid-Katalysatoren enthaltenden Pasten, die vereinfacht ohne langes Vermahlen und die dabei auftretenden Temperaturprobleme hergestellt werden können und zu einwandfreien Überzügen bei der kathodischen Elektroabscheidung führen.

Es hat sich gezeigt, daß diese Aufgabe durch das den Gegenstand der Erfindung bildende Verfahren zur Herstellung einer Katalysatorpaste für kathodisch abscheidbare Elektrotauchlacke auf der Basis von Dibutylzinnoxid, durch Vermahlen von Dibutylzinnoxid mit einem Anreibebindemittel in Anwesenheit von Wasser, gelöst werden kann, das dadurch gekennzeichnet ist, daß man das Dibutylzinnoxid vor dem Vermahlen mit organischem Lösemittel, mit einer zur Neutralisation von kathodisch abscheidbaren Elektrotauchlacken üblichen organischen Säure und gegebenenfalls mit vorhandenem Netzmittel bei einem Wassergehalt bis zu 5 Gew.-%, bezogen auf die gesamte vorzudispergierende Mischung vordispergiert und dann mit dem Anreibebindemittel und Wasser dispergiert und vermahlen wird.

Überraschenderweise hat sich nun gezeigt, daß das Dibutylzinnoxid als Pulver durch eine Vorkonditionierung in einem Teil der in dem Elektrotauchbad vorhandenen Säure, und einem Lösungsmittel wesentlich leichter zu dispergieren ist und zu einwandfreien, guten und glatten Elektrotauchlack-Überzügen führt. Dabei wird das Anreibebindemittel thermisch deutlich weniger belastet. Außerdem ergeben sich Zeit- und Energievorteile bei der Herstellung der Pigmentpasten.

Bei dem erfindungsgemäßen Verfahren wird festes, pulverförmiges Dibutylzinnoxid zunächst in einem organischen Lösemittel dispergiert. Das Dibutylzinnoxid-Pulver kann in einer Korngrößenverteilung vorliegen, die der üblicher Katalysatorpulver für die Elektrotauchlackierung entspricht oder etwas darüber liegt, da bei der erfindungsgemäßen Verarbeitung eine weitere Zerkleinerung erfolgt. Geeignete Korngrößen sind z. B. kleiner als 300 µm.

Bei den für das Vordispergieren verwendbaren Lösemitteln handelt es sich um organische Lösemittel, bevorzugt solche, die OH- und/oder SH-Gruppen enthalten. Gegebenenfals können noch weitere Funktionalitäten, wie NH-Gruppen, vorhanden sein. Bevorzugt sind OH-haltige Lösemittel.

Beispiele für einsetzbare Lösungsmittel sind solche, die
1. einen Siedepunkt zwischen 50 bis 300^{o}C haben, bevorzugt zwischen 90 und 250^{o}C, und/oder
2. die ein Molekulargewicht zwischen 32 und 450 aufweisen, bevorzugt zwischen 32 und 300, und
3. die mit dem Anreibebindemittel zumindest teilweise mischbar sind, so daß sich die komplette Pigmentpaste nicht separiert, und
4. die bei Anwendungsbedingungen, also beim Dispergieren, in flüssiger Form vorliegen.

Beispiele für solche Lösemittel sind aliphatische oder aromatische Alkohole mit einer oder mehreren OH-Gruppen, wie z. B. Methanol, Ethanol, Hexanol, Cyclohexanol, Isobutanol, 2-Ethylhexanol, C₁ bis C₁₁-Alkylphenole, Ethylglykol, Butylglykol, Butyldiglykol, Glycerin oder Hydroxyaceton. Ebenso sind Aminoalkohole geeignet, wie z. B. Dimethylaminopropanol, Dibutylaminobutanol oder Cyclohexylaminobutanol. Weitere geeignete Lösungsmittel sind OH-haltige Ether oder Ester oder Amide, wie z. B. Ethoxyethanol, Ethoxy- propanol, Hexoxypropanol, Hexoxybutanol, Hydroxyethylacetat, Hydroxybutylacetat, Di(Hydroxypropyl)-Malonester oder Hydroxypropylacetamid. Geeignet sind auch Gemische dieser Lösemittel.

Weitere geeignete Verbindungen sind analoge Verbindungen mit anderen Heteroatomen wie aliphatische oder aromatische Thiole, z. B. Thiophenol, Thiopropanol und Propandithiol. Alle Lösemittel können einzeln oder im Gemisch eingesetzt werden, solange eine Reaktion zwischen ihnen nicht eintritt.

Den vorstehenden Lösemitteln können auch weitere nicht reaktive Lösemittel anteilweise zugesetzt werden. Beispiele sind lineare oder verzweigte aliphatische oder aromatische Kohlenwasserstoffe, z. B. Toluol, Xylol, Cyclohexan, n-Hexan oder Isodecan. Ebenso lassen sich Ketone oder Ester einsetzen, wie z. B. Methylisopropylketon, Diisobutylketon, Cyclohexanon, Butylacetat, Acetophenon, Acetoessigsäureethylester, Isopropylpropionat, tert.Butylacetat oder 2-Ethylhexylbutyrat. Weiter sind auch Ether geeignet, wie z. B. Diisobutylether, Methylisobutylether oder Di-tert.butyldiethylenglykolether.

Bevorzugt werden OH-gruppenhaltige Lösemittel, besonders bevorzugt Ethylenglykol und/oder Propylenglykol oder Ethylen- oder Propylenglykolmonoether mit einer Molmasse zwischen 50 und 200 g/mol eingesetzt.

Es ist günstig solche Lösemittel aus den obigen Beispielen zu verwenden, die auch dem Elektrotauchbad zur Modifizierung seiner Eigenschaften in üblicher Weise zugesetzt werden.

Beim Vordispergieren wird außer dem Lösemittel eine organische Säure zugesetzt. Es handelt sich dabei um eine Säure, wie sie später in üblicher Weise zur Neutralisation des im Elektrotauchlack, in den die erfindungsgemäße Dibutylzinnoxid-Paste als Katalysator eingearbeitet werden soll, eingesetzten kathodisch abscheidbaren Bindemittels verwendet wird. Es kann die gleiche Säure Sein, die später für das Bindemittel verwendet wird, oder eine andere.

Bei den organischen Säuren handelt es sich um die üblichen zur Neutralisation von Elektrotauchlacken eingesetzten Säure. Sie sind bevorzugt einbasische Säuren, wie z. B. Ameisensäure, Essigsäure, Milchsäure, Dibutylphosphorsäure sowie Octansäure.

Der Mengenanteil der zum Vordispergieren verwendeten Säure liegt z. B. bei etwa 0,05 bis 5 mol Säure pro mol des eingesetzten DBTO.

Die Säure wird im wesentlichen wasserfrei eingesetzt. Dies bedeutet, daß der Wassergehalt der gesamten vorzudispergierenden Mischung aus Säure, Lösemittel, DBTO, Wasser und gegebenenfalls Netzmittel bis zu maximal 5 Gew.-%, bevorzugt nicht mehr als 2 Gew.-% beträgt. Die untere Grenze liegt bevorzugt bei 0,5 Gew.-%.

Im allgemeinen ist es günstig, wenn die Säure in dem verwendeten Lösemittel löslich ist und darin gelöst vorliegt, jedoch ist dies nicht erforderlich.

Gegebenenfalls können dem vorzudispergierenden Gemisch Additive, beispielsweise Antischaum oder Netzmittel zugesetzt werden, wie z. B. 2,4,7,9-Tetramethyl-5-decin-4,7-diol. Im allgemeinen liegt die Gesamtmenge derartiger Zusätze und insbesondere des Netzmittels bei bis zu 3 Gew.-% bezogen auf das gesamte Gemisch.

Bei der Vordispergierung des DBTO in dem Lösemittel oder Lösemittelgemisch, der Säure und gegebenenfalls einem Netzmittel wird die Menge an Lösemittel so gewählt, daß eine geeignete Viskosität eingestellt wird, d. h., daß eine dünnviskose flüssige Masse entsteht, die in einer Rührvorrichtung, wie einem Schnellrührer (Dissolver) gerührt werden kann. Andererseits soll die Masse nicht so dünnflüssig sein, daß sich die dispergierten Teilchen leicht wieder absetzen. Um eine günstige Viskosität zu erzielen, kann das Gewichtsverhältnis DBTO zu Lösemittel von 4:1 bis 1:4 variiert werden. Ist die Mischung zu dünn, kann die DBTO-Menge erhöht werden, um eine gute Stabilität zu erreichen. Ist dies zu hochviskos, kann Lösemittel zugefügt werden, um eine ausreichende Dispergierung sicherzustellen.

Die Vordispergierung erfolgt mit einer Rührvorrichtung, z. B. mit einem schnell laufenden Rührer (z. B. einem Dissolver).

Dispergierzeit und -temperatur hängen von verschiedenen Faktoren ab, wie der Viskosität, der Art der Säure und des Lösemittels, sowie von der Art des Rührwerks.

Im allgemeinen reichen Rührzeiten von 0,5 bis 5 Stunden bevorzugt 1 bis 3 Stunden aus. Die Temperatur wird so gesteuert, daß keine Erwärmung über die Siedetemperatur des verwendeten Lösemittels und im allgemeinen keine Erwärmung über 110^{o}C erfolgt. Diese kann durch geeignetes Kühlen oder Erwärmen erfolgen. Im Prinzip kann bei jeder Temperatur unter dem Siedepunkt des Lösemittels gearbeitet werden, wobei jedoch zur Erzielung günstiger Dispergierzeiten zumindest leicht erhöhte Temperaturen von z. B. 400^{o}C oder darüber günstig sind. Bevorzugt ist ein Bereich von 50 bis 80^{o}C.

Nach dem erfolgten Vordispergieren wird die erhaltene Dispersion nach Zusatz von Anreibebindemittel und Wasser weiter dispergiert und vermahlen.

Es ist günstig, wenn der Dispersion unmittelbar nach dem Vordispergieren ohne längere Wartezeit das Anreibebindemittel und Wasser zugesetzt werden. Das Anreibebindemittel kann beispielsweise zuerst, gefolgt vom Wasser zugefügt werden oder kann ein Gemisch von Anreibebindemittel mit dem Wasser zugesetzt werden.

Das Anreibebindemittel wird in einem derartigen Viskositätszustand zugefügt, daß es pumpbar ist. Um dies zu erreichen, kann es mit Lösemittel versetzt werden. Als Lösemittel sind für Elektrotauchlacke übliche Lösemittel geeignet, sowie auch die zum Vordispergieren verwendeten.

Die für die Bereitung der DBTO-Paste geeigneten Anreibebindemittel sind für diesen Zweck übliche Bindemittel. Sie sind als Pastenharze bekannt. Es können aber auch Bindemittel sein, wie sie in den Elektrotauchlacken zur Überzugsbildung verwendet werden und später beispielsweise als Bindemittel für Elektrotauchlacküberzugsmittel beschrieben werden. Sie zeichnen sich meist dadurch aus, daß sie eine gute Wasserlöslichkeit besitzen und ebenfalls ein gutes Benetzungsvermögen. Beispiele für solche Pastenbindemittel sind z. B. in der EP-A 0 183 025 oder der EP-A 0 270 877 beschrieben. Es sind Harze, die entweder eine Wasserdispergierbarkeit, z. B. durch quartäre Ammoniumgruppen besitzen oder die nach Neutralisation mit einer Säure in Wasser zu dispergieren sind. Im letzteren Falle wird die zur Vordispergierung verwendete Säuremenge so gewählt, daß sie ausreicht, das Harz zu dispergieren.

Das Wasser wird in voll entsalzter Form zugesetzt.

Anreibebindemittel und Wasser werden bevorzugt unter Rühren zu der Dispersion gefügt. Die Menge richtet sich nach der für das Vermahlen gewünschten Viskosität. Im allgemeinen beträgt das Gewichtsverhältnis von DBTO zu Anreibebindemittel (bezogen auf den Festkörper) 1:4 bis 4:1, bevorzugt 1:2 bis 2:1. Die Wassermenge beträgt im allgemeinen mindestens die gleiche Menge wie das Bindemittel. Die obere Grenze wird durch die gewünschte Viskosität der Paste bestimmt.

Die homogenisierte Mischung kann dann auf einer Mühle, z. B. einer Multikammermühle in üblicher Weise vermahlen werden. Die günstige Verweilzeit für das Verfahren kann der Fachmann in wenigen Versuchen ermitteln. Sie ist abhängig von der Durchflußgeschwindigkeit, von der Kammergröße, von der Temperaturabführung und von der Menge und Art der Mahlkörper. Es entsteht bei diesem Verfahren eine homogene, trübe Pigmentanreibung. Diese Paste ist in der gewünschten frei fließenden Form lagerstabil und sedimentiert über längere Zeit nicht.

Aus der so erhaltenen Katalysatorpaste kann dann unter Zusatz von gegebenenfalls weiterem Anreibebindemittel, weiterem Neutralisationsmittel, weiterem Netzmittel, weiterem Wasser und zusätzlichen Pigmenten eine gefärbte Pigmentpaste aufgebaut werden. Diese kann dann auf einem entsprechenden Mahlaggregat, z. B. einer Perlmühle, auf die gewünschte Kornfeinheit vermahlen werden. Aus dieser so erhaltenen Pigmentanreibung kann dann als Zweikomponenten-Material, zusammen mit einer Dispersion der Bindemittel, oder als Einkomponenten-Material im Gemisch mit dem notwendigen Lackbindemittel, nach Verdünnen mit voll entsalztem Wasser, ein Elektrotauchlack-Überzugsmittel hergestellt werden. Aus diesem Elektrotauchlack-überzugsmaterial können dann nach üblichen Verfahren leitfähige Substrate beschichtet und der Lackfilm dann vernetzt werden.

Bei den in den Pigmentpasten einsetzbaren Pigmenten handelt es sich z. B. um handelsübliche Pigmente. Es können z. B. Titandioxid, Ruß, organische Farbpigmente, Interferenzpigmente, Aluminiumsilikat, Bariumsulfat, Bleichchromat, Bleicarbonat oder Schichtsilikate eingesetzt werden.

Eine andere Möglichkeit besteht darin, daß eine erfindungsgemäß hergestellte Katalysatorpaste nachträglich einem Elektrotauchlack-Überzugsmaterial ohne weitere zusätzliche Vermahlung zugesetzt wird. Auch in diesem Falle ist eine glatte störungsfreie Oberfläche des abgeschiedenen, eingebrannten KTL-Films zu erzielen.

Die für das Elektrotauchlackmittel eingesetzten Bindemittel oder Bindemittelmischungen sind die üblichen basischen filmbildenden Harze oder Harzgemische oder Vernetzer. Beispiele für geeignete Harze sind beispielsweise in der EP-A 0 261 385 beschrieben. Es handelt sich um Harze, die durch radikalische Polymerisation von olefinische Gruppen enthaltenden Monomeren erhalten werden. Sie können gegebenenfalls OH-, SH- oder Aminogruppen enthalten oder andere funktionelle Gruppen. Beispiele für ungesättigte N-gruppenhaltige Monomere sind N-Dialkyl- oder N-Monoalkylaminoalkyl(meth)acrylate, N-Dialkyl- oder N-Monoalkylaminoalkyl(meth)acrylamid und/oder Vinylgruppen enthaltende heterocyclische Verbindungen mit einem oder mehreren basischen Stickstoffatomen, wie beispielsweise N-Vinylimidazol.

OH-gruppenhaltige polymerisierbare Monomere sind solche wie z. B. Hydroxyalkyl(meth)acrylate oder Acrylamide. Andere polymerisierbare Verbindungen sind beispielsweise Allyalkohol, Monovinylether von Polyalkoholen, Vinylaromaten, (Meth)Acrylsäureester, (Meth)Acrylnitryl und Vinylether von Monoalkoholen. Diese Verbindungen können in bekannter Weise durch Lösungs- oder Emulsionspolymerisation in Polymere überführt werden.

Die erfindungsgemäß verwendeten Bindemittel können ionische oder in ionische Gruppen überführbare Substituenten tragen. Beispiele dafür sind primäre, sekundäre, tertiäre Aminogruppen, quartäre Ammoniumsubstituenten oder auch tertiäre Schwefelsubstituenten. Weisen die Bindemittel keine ionischen oder ionisierbare Gruppen auf, so sind sie nicht selbst wasserdispergierbare Bindemittel und können nur in Verbindung mit anderen wasserdispergierbaren Bindemittel eingesetzt werden.

Geeignete funktionelle Gruppen können über die Monomere direkt in die Bindemittel eingeführt werden, oder es besteht die Möglichkeit, daß durch Reaktionen nach der Polymerisation Substituenten eingeführt werden, die die notwendingen Eigenschaften aufweisen. Ebenso sind auf diese Art und Weise auch vernetzungsfähige Gruppen, z. B. halbblockierte Isocyanate, einzuführen.

Über die Anzahl der Amino- oder OH-Funktionen kann die Löslichkeit der Bindemittel beeinflußt werden. Ebenso sind für eine gute Vernetzung im Film mindestens zwei reaktive Gruppen, wie z. B. reaktive OH-Gruppen, reaktive Aminogruppen, reaktive SH-Gruppen oder blockierte Isocyanate notwendig. Die Menge ist über die Anzahl der entsprechenden Monomere bei der Reaktion zu steuern. Die Bindemittel haben bevorzugt eine Molmasse von 1500 bis 30000, bevorzugt von 2500 bis 20000.

Weitere geeignete Bindemittel sind z. B. in EP-A 0 082 291, DE-OS 36 15 810 oder EP-A 0 234 395 beschrieben. Es sind basische Basisharze, deren Aminzahlen zwischen 20 und 250 liegen können, und deren zahlenmittlere Molmasse zwischen 300 und 10000 liegen kann. Als basische Gruppen treten auf: -NH², -NRH, -NR², -⁺NR³, -⁺SR², -⁺PR³. Bevorzugt sind stickstoffbasische Gruppen. Basisharze sind beispielsweise Aminoepoxidharze, die mit bekannten primären, sekundären oder tertiären Aminen hergestellt werden. Der chemische Aufbau der Aminoepoxidharze und ihre Eigenschaften könne im weiten Umfang beeinflußt werden. Durch Auswahl der Epoxidharze₁ der benutzten Amine, durch Änderung der Menge und der OH-Funktionalitäten, durch Variation des Molekulargewichtes sowie durch Änderung des Verhältnisses von weichen oder harten Molekülsegmenten können die Eigenschaften gezielt beeinflußt werden. Basisharze sind z. B. Aminoepoxidharze mit primären oder sekundären OH-Gruppen, Aminopolyurethanharze und Mannich-Basen auf Basis von Bishphenol A, reaktivem Amin und Formaldehyd, Aminoepoxidharze mit endständigen Doppelbindungen sowie Umsetzungsprodukte von Aminen mit cyclischen Carbonaten auf Basis von Dihydroxydivinylmethan (Bisphenol F) oder Dihydroxydivinylpropan (Bisphenol A).

Die Basisharze können selbst- und fremdvernetzend sein. Als Vernetzer geeignete Verbindungen sind z. B. blockierte Polyisocyanate, Melaminharze, umesterungs- und umamidierungsfähige Vernetzer. Diese Vernetzer sind in der Literatur gut beschrieben, so z. B. Vernetzer auf Triazinbasis in der DE-A 16 69 593, Vernetzer auf Basis verkappter Isocyanate in "Farbe und Lack" 1989, Jahrgang 12, 1983, Seite 28 ff., umesterungs- oder umamidierungsfähige Vernetzer in der EP-A 0 004 090 oder der DE-A 34 36 345. Die Vernetzer können einzeln oder als Gemisch zugesetzt werden.

Bevorzugt sind Bindemittel oder Bindemittelgemische mit einem Gehalt an blockierten Isocyanaten; beispielsweise Aminoepoxidharze, die über blockierte Isocyanate vernetzen.

Diese Bindemittel können mit den üblichen Säuren neutralisiert und in die Wasserphase überführt werden. Die dabei verwendeten organischen Säuren sind bevorzugt einbasische Säuren, wie z. B. Ameisensäure, Essigsäure, Milchsäure, Dibutylphosphorsäure sowie Octansäure. Ein Teil dieser zur Neutralisation der Bindemittel verwenbaren Säure kann bei der Vordispergierung zur Herstellung der erfindungsgemäßen Katalysatorpaste eingesetzt werden. Durch die Verwendung einer notwendigen Menge Säure aus dem Elektrotauchlackbad wird erreicht, daß bei der Herstellung der DBTO-Paste keine unnötige zusätzliche Säure eingesetzt wird.

Zur Verbesserung der Oberfläche ist es weiterhin möglich, dem Elektrotauchbad auf eine geeignete Weise Additive, wie z. B. Weichmacher zuzusetzen. Als Weichmacher kommen z. B. in Frage Phthalsäureester, Polyvinylether, oder Polyalkylenoxide oder deren Ether. Auch niedermolekulare, nicht neutralisierbare Harze können gegebenenfalls anteilsweise zur Beeinflussung der Filmeigenschaften zugegeben werden.

Bei den verwendeten Elektrotauchlack-Überzugsmitteln handelt es sich um Einkomponenten-Materialien oder Zweikomponenten-Materialien, d. h. das Elektrotauchlackbad wird entweder aus einer Komponente durch Verdünnen hergestellt, oder es wird aus einer Mischung einer Bindemitteldispersion und einer Pigmentpaste in einem festen Verhältnis hergestellt und verdünnt. Die Katalysatorpaste wird entweder über die Pigmentpaste dem Bad zugegeben, oder sie ist dem Elektrotauchlack auch nachträglich zuzusetzen. Sie wird rasch homogenisiert. Die Menge der eingesetzten Katalysatorpaste ist abhängig von der katalytischen Wirkung auf die Harzbindemittelmischung. Sie kann durch Experiment leicht ermittelt werden.

Aus den so hergestellten Elektrotauchlackbädern können auf bekannte Art und Weise metallisch leitende Substrate beschichtet werden. Diese abgeschiedenen Elektrotauchlacküberzüge werden dann bei erhöhter Temperatur zum Verfließen und zum Vernetzen gebracht. Die Trockenfilmstärke beträgt 10 - 50 µm. Auf den so erhaltenen Filmen sind Folgeüberzüge möglich. Eine andere Vorgehensweise liegt darin, daß der abgeschiedene Elektrotauchlackfilm naß-in-naß mit einem Folgeaufbau beschichtet wird und erst danach eingebrannt wird. Als Folgeüberzüge sind übliche Füller, Decklacke, Metallicbasislacke und/oder Klarlacke möglich. Es kann sich um lösemittelhaltige Systeme, wäßrige Systeme oder Zweikomponenten-Systeme handeln. Die so erhaltenen Überzüge zeichnen sich durch eine glatte, dichte, homogene Oberflächen aus. Sie zeigen besonders auf den Waagerechten keine Störungen, wie z. B. Pickel, Stippen oder Krater.

### Die folgenden Beispiele erläutern die Erfindung

Alle Prozentangaben beziehen sich auf Gewichtsprozent.

Der Festkörper wird analog DIN 53 182 bei 150^{o}C bestimmt.

### Herstellung von Bindemitteln:

### Beispiel 1:

Es werden 228 Teile Bisphenol A (1 mol) mit 260 Teilen Diäthylaminopropylamin (2 mol) und 66 Teilen Paraformaldehyd (91 %; 2 mol) in Gegenwart von 131 Teilen Toluol als Azeotropschlepp-Mittel bis zur Abtrennung von 42 Teilen Reaktionswasser umgesetzt. Nach Addition von 152 Teilen Diethylenglykoldimethylether und Kühlen des Produkts auf 30^{o}C werden innerhalb von 45 min. 608 Teile (2 Mol) eines mit 2-Ethylhexanol halbblockierten Toluylen-diisocyanats zugegeben. Nach Erreichen eines NCO-Wertes von praktisch null werden 1400 Teile dieser Lösung mit einer Lösung von 190 Teilen eines Epoxidharzes auf Basis von Bisphenol A (Epoxidäquivalentgewicht ca. 190) und 250 Teilen (1 Mol) eines Glycidylesters einer gesättigten tertiären C₉ bis C₁₁ Mono-carbonsäure in 389 Teilen Diethylenglykoidimethylether versetzt und bei 95^{o} bis 100^{o}C bis zu einem Epoxidwert von 0 umgesetzt. Das Produkt ist nach Zusatz von 40 Millimol Ameisensäure pro 100 g Festharz einwandfrei mit Wasser zu verdünnen.

### Beispiel 2:

Gemäß EP-B-12 463 werden 391 g Diäthanolamin, 189 g 3-(N,N-Dimethylamino)propylamin und 1147 g eines Adduktes aus 2 Mol Hexandiamin-1,6 und 4 mol Glycidylester der Versaticsäure (Cardura E 10 von Shell) zu 5273 g Bisphenol A Epoxydharz (Epoxidäquivalentgewicht ca. 475) in 3000 g Ethoxypropanol gegeben. Das Reaktionsgemisch wird 4 Std. unter Rühren bei 85^{o} bis 90^{o}C und dann eine Stunde bei 120^{o}C gehalten. Anschließend wird mit Ethoxypropanol auf einen Festkörper von 60 % verdünnt.

### Beispiel 3:

Zu 431 g einer Lösung (75 % in Äthylacetat) eines Umsetzungsprodukts aus 3 Mol Toluylendiisocyanat mit 1 Mol Trimethylolpropan (Desmodur L ^{R}) werden bei 70^{o}C langsam unter Rühren 160 g Caprolactam zugefügt. Die Reaktionsmischung wird danach bei 70^{o}C gehalten, bis der NCO-Gehalt praktisch auf null gesunken ist. Dann wird 2-Butoxyethanol (204 g) zugegeben und das Äthylacetat über eine Kolonne bis zu einem Festkörper von 70 % abdestilliert.

### Herstellung von Pigmentpasten

### Beispiel 4:

Es werden 30 g Ethoxypropanol, 3,0 g 2,4,7,9-Tetramethyl-5-decin-4,7-diol (Surfynol 104®, Netzmittel), 3,0 g Ameisensäure (50 %) und 40 g Dibutylzinnoxid an einem Dissolver miteinander vermischt und ca. 2 Std. bei 50 bis 60^{o}C dispergiert. Dazu werden dann 41 g eines Anreibeharzes nach EP-A 0 183 025 Beispiel 5 (80 %ig) unter Rühren gegeben und dann 73 g voll entsalztes Wasser. Diese Mischung wird dann auf einer geeigneten Mühle in zwei Mahlgängen auf die notwendige Feinheit vermahlen. Es entsteht eine flüssige, viskose, trübe Pigmentpaste.

### Vergleichsversuch A:

Es werden an einem schnellaufenden Rührwerk nacheinander zugegeben und gemischt: 37,5 Ethoxypropanol, 3,8 g 2,4,7,9-Tetramethyl-5-decin-diol (Surfynol 104®, Netzmittel), 3,8 g Ameisensäure (50 %), 51,5 g eines Bindemittels nach EP-A 0 183 025 Beispiel 5 (80 %ig), 50 g Dibutylzinnoxid und 103,5 g voll entsalztes Wasser. Diese Mischung wird homogen gerührt und dann auf der gleichen Mühle wie Beispiel 4 in zwei Mahlgängen vermahlen. Es entsteht eine flüssige, viskose, trübe Pigmentpaste.

### Vergleichsversuch B:

Es werden an einem schnellaufenden Rührwerk nacheinander zugegeben und gemischt: 37,5 g Ethoxypropanol, 3,8 g 2,4,7,9-Tetramethyl-5-decin-4,7-diol (Surfynol 104®, Netzmittel), 3,8 g Ameisensäure (50 %), 51,5 g eines Bindemittels nach EP-A 0 183 025 Beispiel 5 (80 %ig), 50 g Dibutylzinnoxid und 103,5 g voll entsalztes Wasser. Diese Mischung wird homogen gerührt und dann auf einer geeigneten Mühle in 6 bis 8 Mahlgängen auf die notwendige Feinheit vermahlen.

### Beispiel 5:

Es werden 30 g Ethoxypropanol, 3 g Netzmittel, 2 g Essigsäure (100 %) und 40 g Dibutylzinnoxid an einem Dissolver gemischt und 2 Std. bei 50 bis 60^{o}C dispergiert. Dann werden 60 g eines Anreibeharzes nach EP-A-0 183 025 Beispiel 3 (55 %ig) zugerührt und dann 64 g voll entsalztes Wasser. Nach einer Homogenisierung wird die Mischung auf einer geeigneten Mühle in zwei Mahlgängen auf die notwendige Kornfeinheit vermahlen.

### Beispiel 6:

Es werden 75 g eines Bindemittels nach EP-A 0 183 025 Beispiel 5 (80 %ig) mit 7 g Ameisensäure (50 %) und 250 g voll entsalztem Wasser vermischt. Zu diesem Klarlack werden 82,5 g einer Paste nach Beispiel 4 zugegeben, dann 408 g Titandioxid, 120 g Aluminiumsilikat und 13,5 g Ruß. Diese Paste wird mit ca. 90 g Wasser auf eine geeignete Viskosität eingestellt. Der Festkörper dieser Pigmentpaste beträgt ungefähr 60 %. Dann wird diese Paste auf einer Perlmühle auf die notwendige Kornfeinheit vermahlen.

### Vergleichsversuch C:

Es wird wie in Beispiel 6 verfahren mit der Maßgabe, daß anstatt 82,5 g einer Paste nach Beispiel 4 82,5 g einer Paste nach Vergleichsversuch A eingesetzt werden. Dann wird genauso verfahren.

### Vergleichsversuch D:

Es wird wie in Beispiel 6 verfahren mit der Maßgabe, daß anstatt Paste 1 82,5 g einer Paste nach Vergleichsversuch B eingesetzt werden.

### Beispiel 7:

Es werden 378 g Bindemittel nach Beispiel 2, 7,5 g Essigsäure (100 %) und 85 g einer Paste nach Beispiel 5 miteinander vermischt. Dazu werden unter Rühren 6 g Ruß und 559 g Titandioxid gegeben. Man stellt mit ca. 500 g Butylglykol auf eine geeignete Viskosität ein und vermahlt die Pigmentpaste auf einer entsprechenden Mühle auf eine ausreichende Korngröße.

### Lackbeispiele

### Beispiel 8:

Es wird aus 300 g eines Harzes nach Beispiel 2 und 700 g nach Beispiel 1 (bezogen auf den Festkörper) eine Mischung hergestellt. Diese wird durch Destillation weit von Lösungsmittel befreit, mit 45 g Milchsäure (50 %) versetzt und in der Wärme in eine Dispersion mit dem Festkörper von ca. 43 % umgewandelt. Zu 1166 g dieser Dispersion wird nach Verdünnen mit voll entsalztem Wasser auf ca. 15 % Festkörper 333 g einer Pigmentpaste nach Beispiel 6 zugesetzt. Es entsteht ein kathodisches Tauchbad mit ca. 20 % Festkörper. In diesem KTl-Bad werden Stahlbleche beschichtet und danach durch Erwärmen vernetzt. Die Oberfläche der beschichteten Substrate (Trockenfilmstärke 20 - 22 µm) sehen glatt und gleichmäßig aus und zeigen keine Filmstörungen.
(KTL = Kathodische Tauchlackierung)

### Vergleichsversuch E:

Es wird wie in Beispiel 8 verfahren, nur wird als Pigmentpaste die gleiche Menge einer Paste nach Vergleichsversuch C zugefügt. Der Versuch wird wie schon unter Beispiel 8 beschrieben beschichtet. Die Oberflächen sehen rauh aus mit Oberflächenstörungen.

### Vergleichsversuch F:

Es wird wie in Beispiel 8 verfahren, unter Benutzung der Pigmentpaste nach Vergleichsversuch D. Der Versuch wird analog den anderen beschichtet. Die entstehende Oberfläche ist glatt und homogen.

### Beispiel 9:

Es werden Bindemittel nach Beispiel 2 und Beispiel 3 im Verhältnis 3:1 bezogen auf den Festkörper gemischt und mit 3,7 g Ameisensäure (50 %) pro 100 g Festkörper versetzt. Zu 655 g dieses Gemisches werden 719 g der Paste nach Beispiel 7 gegeben, diese Mischung wird intensiv homogenisiert und mit Methoxypropanol auf einen Festkörper von ca. 55 % eingestellt. Aus diesem Material wird durch Verdünnen mit voll entsalztem Wasser ein KTL-Bad mit einem Festkörper von ca. 17 % hergestellt. Dieser Lack kann mit den üblichen Substraten beschichtet werden. Es ergeben sich homogene, dichte Oberflächen ohne Oberflächenstörungen.

## Patentansprüche

1. Verfahren zur Herstellung einer Katalysatorpaste für kathodisch abscheidbare Elektrotauchlacke auf der Basis von Dibutylzinnoxid, durch Vermahlen von Dibutylzinnoxid mit einem Anreibebindemittel in Anwesenheit von Wasser,
**dadurch gekennzeichnet,**
daß man das Dibutylzinnoxid vor dem Vermahlen mit organischem Lösemittel, mit einer zur Neutralisation von kathodisch abscheidbaren Elektrotauchlacken üblichen organischen Säure und gegebenenfalls mit vorhandenem Netzmittel bei einem Wassergehalt bis zu 5 Gew.-%, bezogen auf die gesamte vorzudispergierende Mischung vordispergiert und dann mit dem Anreibebindemittel und dem Wasser dispergiert und vermahlt.

2. Verfahren nach Anspruch 1, dadurch gekennzeichnet, daß als organisches Lösemittel eines mit OH- und/oder SH-Gruppen, gegebenenfalls im Gemisch mit anderen Lösemitteln verwendet wird.

3. Verwendung der nach Anspruch 1 oder 2 hergestellten Katalysatorpasten in kathodisch abscheidbaren Elektrotauchlacken.

4. Verwendung nach Anspruch 3 in kathodisch abscheidbaren Elektrotauchlacken auf der Basis von blockierte Isocyanate enthaltenden Bindemitteln oder Bindemittelmischungen.

5. Verfahren zur kathodischen Elektrotauchlackierung von elektrisch leitfähigen Substraten, dadurch gekennzeichnet, daß man mit Dibutylzinnoxid in Pastenform, hergestellt nach Anspruch 1 oder 2, als Katalysator arbeitet.

## Claims

1. Process for the production of a catalyst paste for electrophoretic lacquers capable of cathodic deposition based on dibutyltin oxide (DBTO), by grinding dibutyltin oxide with a grinding binder in the presence of water,
**characterised in that** the dibutyl tin oxide is pre-dispersed prior to
grinding with organic solvent, with an organic acid conventional for the neutralisation of electrophoretic lacquers capable of cathodic deposition and optionally with available wetting agent with a water content of up to 5 % w/w, based on the total mixture to be pre-dispersed, and then dispersed with the grinding binder and the water and ground.

2. Process according to claim 1, characterised in that as organic solvent one with -OH and/or -SH groups, optionally in a mixture with other solvents, is used.

3. Use of the catalyst pastes produced according to claim 1 or 2 in electrophoretic lacquers capable of cathodic deposition.

4. Use according to claim 3 in electrophoretic lacquers capable of cathodic deposition based on binders or binder mixtures containing blocked isocyanates.

5. Process for the cathodic electrophoretic lacquering of electrically conductive substrates, characterised in that work is carried out with dibutyltin oxide in paste form, produced according to claim 1 or 2, as catalyst.

## Revendications

1. Procédé pour la préparation d'une pâte catalytique à base d'oxyde de dibutylétain pour les vernis pour électrodéposition déposables à la cathode, par broyage de l'oxyde de dibutylétain avec un liant de base en présence d'eau, caractérisé en ce que l'on pré-disperse avant le broyage l'oxyde de dibutylétain dans un solvant organique, dans un acide organique usuel pour la neutralisation des vernis pour électrodéposition déposables à la cathode et éventuellement dans un agent mouillant présent pour une teneur en eau allant jusqu'à 5% en poids, rapportée à la totalité du mélange devant être pré-dispersé, en ce que l'on disperse ensuite dans le liant de base et l'eau et en ce que l'on broie.

2. Procédé selon la revendication 1, caractérisé en ce que l'on utilise, comme solvant organique, un solvant contenant des groupes OH et/ou SH, éventuellement en mélange avec d'autres solvants.

3. Utilisation des pâtes catalytiques préparées selon la revendication 1 ou 2 dans les vernis pour électrodéposition déposables à la cathode.

4. Utilisation selon la revendication 3 dans les vernis pour électrodéposition déposables à la cathode à base d'isocyanates bloqués contenant des liants ou des mélanges de liants.

5. Procédé pour revêtir par électrodéposition cathodique des substrats électriquement conducteurs, caractérisé en ce que l'on opère avec de l'oxyde de dibutylétain sous forme de pâte, préparée selon la revendication 1 ou 2, comme catalyseur.
